# EUROPEAN PATENT APPLICATION

(11) **EP 1 113 370 A1**
(43) Date of publication of application: **04.07.2001**
(21) Application number: 00204767.8
(22) Date of filing: 27.12.2000
(51) Int. Cl.: G06F 17/24, G06F 17/60, B07C 1/00

(54) **Method for preparing at least one message for mailing, and data structure for use therein**

(30) Priority: 31.12.1999 NL 1014003
(71) Applicant: Neopost B.V., 9201 BX Drachten (NL)
(72) Inventor: Van der Meer, Hendrik Theodorus, 9203 RC Drachten (NL)
(74) Representative: Prins, Adrianus Willem

(57) **Abstract**

For making ready for mailing a message intended for an addressee, presentation instructions valid for that message, for determining a form of presentation of the message to the addressee are selected. A file of content-determining instructions of the message and of the presentation instructions is transferred to a peripheral device for making the message ready for mailing. The message is subsequently made ready for mailing in accordance with the file of content-determining instructions and the presentation instructions. Selecting the presentation instructions occurs by selecting a single, priorly stored file of presentation instructions which contains i instructions concerning the design of the document itself and concerning the processing of the document. A data structure for carrying out the proposed method is also described.

## Description

### BACKGROUND OF THE INVENTION

This invention relates to a method for at least making ready for mailing at least one message, and a data structure for use therein.

For the computer-controlled mailing of messages, or at least making them ready for mailing, without manual intervention of the person who has initiated the mailing of the message, generally a file of content-determining instructions is selected. Further, presentation instructions for determining a form of presentation to the addressee are selected. These may be, for instance: instructions concerning the manner in which the message is sent, adding standard notices and images, and processing in a standard layout or not if the message is drafted in a flat or specially structured form. As regards e-mail, options include, for instance, sending as HTML or not, and encryption or not. As for fax, options include sending with or without front page, the choice of the resolution: normal, fine or extra fine. For printed documents, examples of further options are the selection of the type of paper, the choice of any envelope, the choice of a mail class, the choice of inserts to be added, and the choice of the place where the physical document will be composed.

The content-determining instructions and the presentation instructions are subsequently sent to a peripheral device, such as a modem or an integrated printing and inserting system, for mailing the message or at least making it ready for mailing.

By the peripheral device, the message is made ready for mailing and optionally sent as well, in accordance with the file of content-determining instructions and the presentation instructions.

In addition to electronic forms of communication such as e-mail, fax, voice-mail and message services especially for mobile equipment (such as SMS), also integrated methods for making messages ready for mailing that are to be presented to the addressee in a physical form, have been developed, in the form of, for instance, the in-line printing and inserting of documents. This last, moreover, besides taking place at a location near the sender, can also take place at a location closer to the addressee than to the sender, to save costs of transportation. For users that send messages in different forms, all this has led to an increased complexity of office systems, which requires much attention and time. Further, this makes it more difficult to ensure that different users use the same presentation forms for the same kind of messages.

### SUMMARY OF THE INVENTION

It is an object of the invention to provide a solution which makes is easier for the user to send messages and to realize the desired presentation form of the messages.

This object is achieved, according to the present invention, by providing a method according to claim 1. The invention further provides a data structure according to claim 19 which is specifically designed for carrying out a method according to claim 1.

For users who send messages in different forms, determining presentation instructions is greatly simplified. Also, it can be ensured better that for the same kind of messages, always the same presentation forms are used.

Particularly advantageous modes and embodiments of the invention are set forth in the dependent claims.

Further objects, aspects, effects and details of the invention appear from the following description of an exemplary embodiment, in which reference is made to the drawings.

### BRIEF DESCRIPTION OF THE DRAWINGS

Fig. 1 is a schematic representation of a structure for carrying out a method according to the invention,
Fig. 2 is a schematic representation of the architecture of a data structure according to the invention,
Fig. 3 is a representation of a first window generated by a data structure according to the invention, and
Fig. 4 is a representation of a second window generated by a data structure according to the invention.

### DETAILED DESCRIPTION

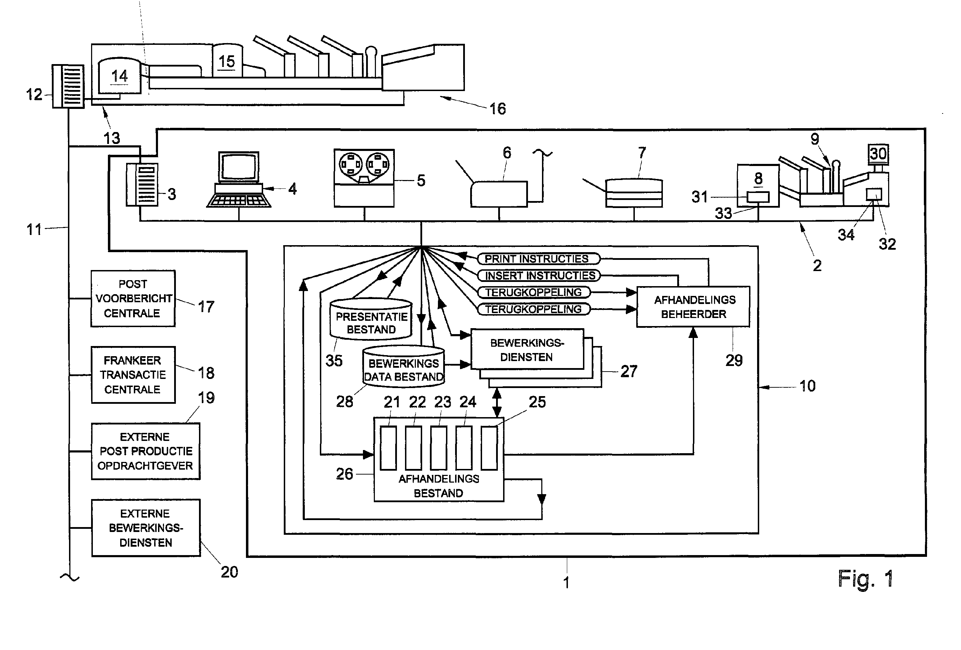

The invention is first described further with reference to the example represented in Fig. 1. With a thick line, a local area 1 is framed, within which a local design of the system is located. This system comprises a local network structure 2 to which a number of stations are connected. According to this example, the connected stations are: a communication server 3, a personal computer 4, a minicomputer 5, a network fax-scanner-printer 6, a printer 7, a high-volume printer 8, an inserter system 9 and a document execution server 10.

The communication server 3 is connected via an adapter to a data transmission network 11, which can be formed, for instance, by a telephone network, a glass fiber network or a coaxial cable network, which may or may not be supplemented with networks connected thereto.

Connected to this data transmission network 11 is a communication and document execution server 12, which in turn is connected via a local network 13 to *inter alia* a printer 14 for printing main documents, a printer 15 for printing inserts, and an inserter system 16 for inserting documents coming from the printing apparatuses 14, 15.

Further connected to the data transmission network 11 are: a mail advance notice exchange 17, to which messages concerning mailings to be sent can be reported, so that the mail can take this into account in planning the sorting and distribution capacity, a franking transaction exchange 18 for settling frankings, an external mail production principal 19 (for instance an associate company which does not have facilities for the integrated generation and finishing of documents) and a server 20 designed with external processing services as an alternative to and in supplementation of internal processing services which will be discussed hereinafter.

The local data processor structure and equipment for generating and finishing documents at location 1 consists, according to this example, of the personal computer 4 (in practice, generally, a plurality of those will be connected to the network 2), the minicomputer 5 and the document execution server 10.

Of this data processor structure, the personal computer 4 and the minicomputer 5 are each designed for providing a first data file in at least one first format, for describing the content of one or more documents. In the personal computer 4, this has been achieved, in this example, in that a current word processing program with a mail merge facility has been installed thereon and in the minicomputer 5 this has been achieved, in this example, in that a database program has been installed thereon with a facility for generating standard correspondence associated with particular situations of entities occurring in an information file. This can be, for instance, a program which generates bank statements in response to a particular transaction sum or a particular number of transactions being reached. Further, on the computer systems 4, 5, current operating systems for such computers have been installed, to which the word processing and database applications have been tailored. Such operating systems are generally known and commercially available, at least licensable, in different forms.

The computers 4, 5 further each comprise a message driver program for converting the first data file in the first format into a second data file in a second format which contains image-defining instructions. As second format, according to this example, a Postscript (registered trademark of Adobe Systems Inc.) format is used. In this printer language, the image-defining instructions comprise separately executable sets of image-defining instructions each comprising image-defining instructions for printing an individual page. This makes it possible to print pages independently of each other in a random order and on different printing apparatuses. It is also possible, however, to use other formats, such as a PCL format, a bit-map format or a suitably designed XML format.

The use of a printer language as second format for the instructions provides the advantage that these, especially for word documents, form image-defining instructions on the basis of which images of a very high resolution can be formed (and hence are also suitable as a basis for reproductions with a less high resolution) and that these are generally very common, so that driving software for a large number of operating systems is supported. Presentation instructions can, for instance, be included in the second format as extensions of the printer language. For further details regarding the addition of extensions, reference is made to specifications regarding the printer language in question.

The document execution server 10 is designed for processing the second data file into a processed second data file comprising driving instructions for generating documents and associated driving instructions for finishing documents. To that end, the document execution server 10, according to this example, is adapted for receiving data files 21-25 in an execution file 26. Further, the document execution server 10 is designed with software in the form of processing services 27. These processing services 27 can, for instance, provide for the determination of a franking value, the entering into franking transactions with the franking transaction exchange 18, the determination of i franking instructions, and the corresponding processing of data files in the execution file.

Other processing services relating to presentation instructions are, for instance: providing for insert instructions for the inserter system 9 in accordance with the instructions in the respective data file 21-25 and data present in a processing data file 28 concerning insert feeders in which the inserts in question are located or data concerning respective inserts associated with particular categories of documents.

The installed processing services 27 can further be designed for selecting equipment for generating and finishing documents and, if necessary, for converting the instructions for generating and finishing documents to a format suitable for the selected apparatus or the selected apparatuses. The transmittal of physical and electronic documents can be operated via a common operating interface.

A further application for which the processing services 27 can be advantageously designed is verifying at least a portion of the driving instructions. This can serve, for instance, to verify addresses or post codes or to check the validity or availability of specified inserts or insert files. The data on the basis of which the validation is carried out can, for instance, be stored in the processing data file or be managed by the external processing services 20.

The processing services 27 which are installed on the document execution server 10 can therefore be designed both for adding presentation instructions and for modifying or converting presentation instructions received as part of the second data file.

For managing presentation instructions from which a selection can be made, there is provided a presentation file 35 which contains files of presentation instructions each representing several presentation instructions. The selection of the presentation instructions for a particular message can be carried out under a particular user authorization. However, the presentation file 35 is exclusively editable under a different authorization than the user authorization. Thus, there is offered to the user a conveniently arranged possibility of choosing as regards presentation possibilities of a message. These can, for instance, have functional names like "fax message informal", "invoice", "letter", "complimentary letter", "letter with brochure", etc.

The presentation file 35 is stored centrally for coupling presentation instructions according to the file 35 of presentation instructions *to* content-defining files in response to driving signals from any one of at least two different client systems. It is thus ensured in a simple manner that the different user interface computers utilize presentation instructions from the same file for sending messages.

The processing services can further be designed for converting image-defining instructions in a first printing language into image-defining instructions in a second printing language. In this example, where the data files 21-25 come in as Postscript software, for instance a translation facility may be provided for translating Postscript into another printer language, such as PCL, or into a format in which the document can be generated as a fax message, an e-mail message or a web page on Internet or an Intranet, including addition of an address (telephone number, e-mail address, page location), and can be transmitted to the respective equipment 3, 6 for generating and finishing a document.

Other processing operations on at least a portion of the image-defining instructions for which the processing services 27 can be designed, are:
reading at least portions of the image-defining instructions and, in accordance with the portions read, sorting sets of the image-defining instructions each associated with a particular document.

The document execution server 10 is further designed for managing communication with the equipment 3, 6, 8, 9 for generating and finishing documents, and operatively connected with that equipment 3, 6, 8, 9 via the network 2 for driving that equipment 3, 6, 8, 9 in accordance with driving instructions from the processed second data file. To that end, the document execution server 10 comprises execution administrator software 29.

In this example, the communication server 3 is designed for transmitting instructions regarding documents to be generated and finished elsewhere, the generation of e-mail messages, as well as web pages for Internet and Intranet applications in accordance with instructions generated by the execution administrator software 29. According to this example, the processing services 27 are further designed for transmitting second data files, rather than transferring them to its own execution administrator software 29, to an external execution administrator. The external execution administrator may be installed, for instance, on the server 12. This can be advantageous, for instance, if the printing and inserting equipment 14-16 which is driven by that server 12 is located closer to addressees or is (better) suited for printing and finishing the documents in question.

Further, in this example, the fax machine 6 is arranged for sending fax messages in accordance with instructions generated by the execution administrator software 29. Finally, the printing apparatus 8 and the inserter system 9 are each separately connected to the document execution server 10 via the network 2.

The inserter system 9 is arranged in-line with the printing apparatus 8 for finishing documents received directly and one-by-one from the printing apparatus 8. This makes it possible to generate and finish documents without manual intervention and through operation from a user interface computer.

The printing apparatus 8 and the inserter system 9 each have their own control unit 31, 32. This makes it possible, inter alia, to have the two apparatuses 8, 9 work separately from each other. To enable different printing apparatuses 8 and inserter systems 9 to be used independently of each other, it is then advantageous that the control units 31, 32 each have their own port 33, 34 for communication with an external data processor.

The inserter system 9 is further arranged for transmitting processing capacity-representing signals to the document execution server 10, and the document execution server 10 is arranged for driving the printing apparatus 8 in response to those processing capacity-representing signals, for printing at least one next document. The processing capacity-representing signals are represented in the drawing as arrows designated "feedback".

The execution administrator software 29 is arranged for managing separate communication with the printing apparatus 8 and the inserter system 9, while coordination between the printing and the execution operations to be carried out takes place on the basis of information regarding the number of associated sheets per set coming from the printing apparatus 8 and numbers of arrived sheets detected by the inserter system 9. The inserter system 9, incidentally, comprises a second printing apparatus 30, with which *inter alia* addresses, logos and franking indicia can be printed on envelopes.

The data processor structure which, in this example, is intended for the management of the generation and finishing of documents is divided over client systems - formed by the personal computer 4 or the minicomputer 5, depending on the source where the data regarding the documents to be generated and finished are composed - and a document execution server 10.

In operation, generating and finishing documents according to this example proceeds as follows:

A first data file is provided in a first format, which will generally be application-specific. This data file describes the content of a document or several documents.

The first data file is processed into a second data file in a second format. This second data file contains image-defining instructions, so that information which defines images which have been created during the draft of the document or the documents is maintained. For processing the first data file into a second data file, from the application a message driver program is activated, which, after being activated, first offers options regarding finishing possibilities.

These options consist of names which represent priorly stored presentation instruction files from the presentation file 35. These files each contain a cluster of presentation instructions which have been chosen for a particular application. The selection of these files of presentation instructions occurs preferably under a particular user authorization. Editing the presentation instruction files, however, preferably occurs exclusively under a different authorization than this user authorization and is not possible under the user authorization.

The second data file is processed, in accordance with the choices made, into a processed second data file with driving instructions for generating documents and associated driving instructions for finishing documents. This processing can take different forms, as appears from the above description. In outline, the following can be distinguished: substance modification, such as addition or alteration, of image-defining instructions and/or presentation instructions and converting instructions to a different format to enable communication with a specific apparatus. The processing operations can be executed while the second data file remains in a temporary storage for document generation and presentation instructions ("spooler").

Next, in accordance with the driving instructions, the equipment 3, 6, 8, 9, 14-16 is driven for generating and finishing documents and the documents are generated and finished by the driven equipment in accordance with those driving instructions.

For managing the document stream, it is then advantageous if the documents are fed one by one from the printing apparatus 8 to the system 9 for finishing documents.

The selection of the presentation instructions thus occurs by selecting a single, priorly stored file of presentation instructions which contains instructions concerning the implementation of the document(s) proper and concerning the processing of the document or the documents. As a consequence, a single choice suffices for determining the implementation of the document and for the processing of the document into a whole that can be sent to an addressee.

That the presentation instructions are accessible with a user authorization, exclusively cluster-wise as centrally managed files of presentation instructions is especially of advantage if the content-determining instructions comprise printing instructions for driving a printer for printing the message or the messages as document or documents, and if the presentation instructions form finishing instructions for finishing the document or the documents. In finishing printed documents, there exist a large number of finishing options, while most users are not familiar with the meaning of many of those finishing options.

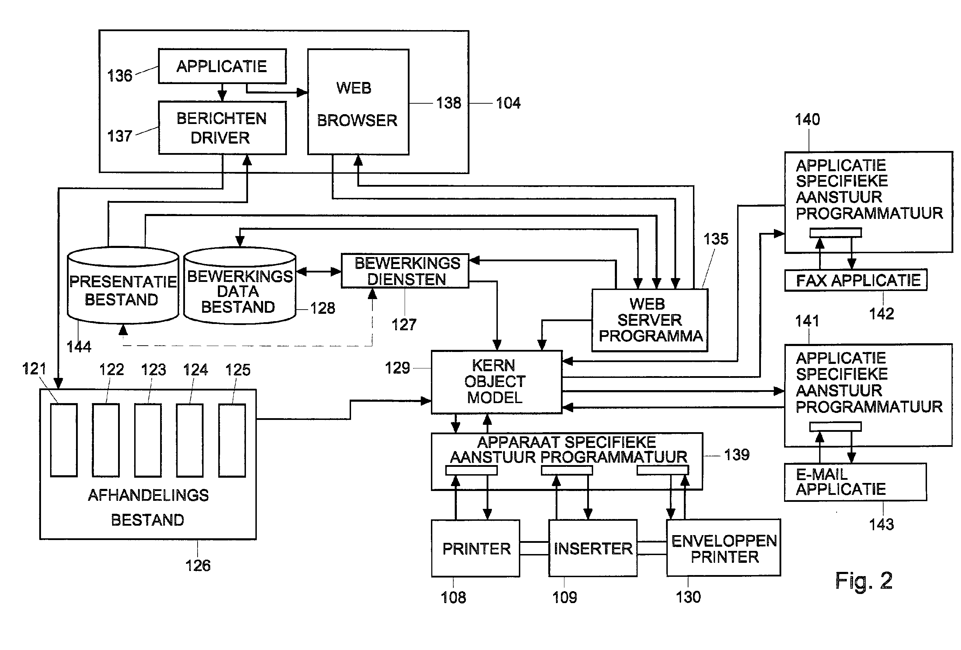

In Fig. 2 an example is represented of an architecture in which a send dialog program ("message driver") 137 is used for processing the first data file in a format associated with an application 136 (such as a word processing program or a database program with a document composition facility), and editable with that application, into a second data file 121-125. The second data file 121-125 is sent to an execution file 126, such as a spooler.

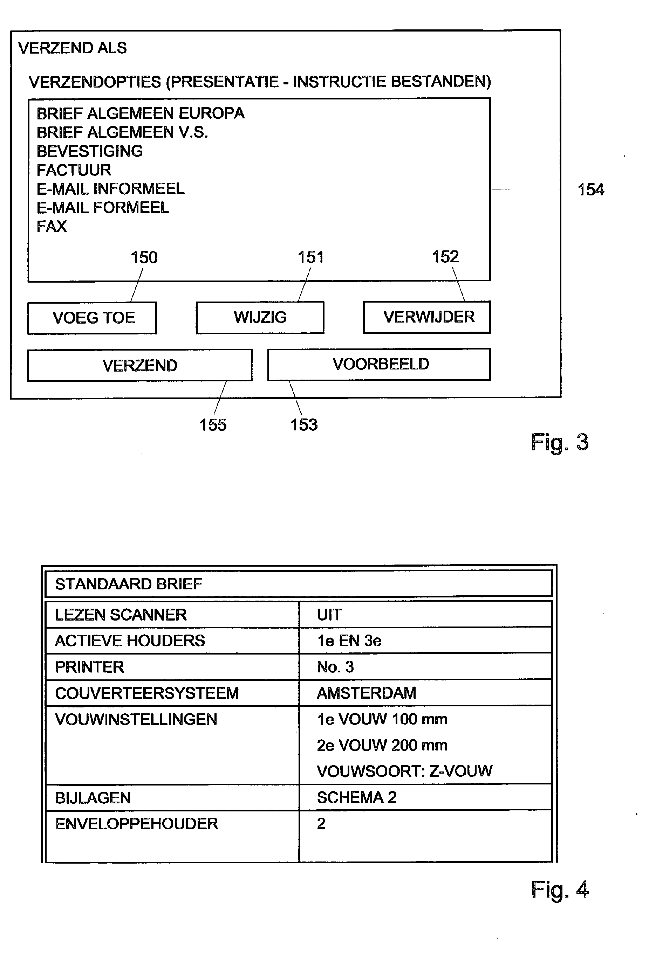

In response to the operation of a "send as" option in the application of the type with which the message has been composed, a send dialog program in the form of the message driver 137 is started. This results initially in the display of a window as shown in Fig. 3. For the user with a user authorization, the "add", "change" and "delete" buttons 150-152 in this window are inoperative. These are only operable under a different authorization than the normal user authorization. Access to the operation of these buttons 150-152 in this example is only possible if the screen according to Fig. 3 is displayed via a web browser, involving prior login with a predetermined password.

The list in the window 154 forms an example of an enumeration of send options available to the user in question, each representing a presentation instruction file. This list can be equal for all users or be set to differ from one user to another. Which presentation instructions in response to selection of a particular presentation instruction file are selected is preferably independent of the computer via which, or the user authorization under which, the selection is carried out.

Selecting a file of presentation instructions occurs by selecting a send option in the window 154. Instead of being represented by words, the files of presentation instructions can also be represented by other symbols or combinations of symbols, such as icons.

If thereupon the button "example" 153 is operated, an example is displayed of the presentation of the message such as it will be received by the addressee. If physical documents are involved, which are inserted and may involve addition of inserts, the possibility may be provided of selecting, after operation of the button "example" 153, the option of choosing an animation and/or physical forwarding of a sample.

If the option of animation is chosen, an animation is played which represents the process of assembly and insertion. Such an animation may optionally be simply formed by a video in which the operations associated with the selected send option are shown.

If the option of forwarding a sample is selected, a mail item is composed in accordance with the specified content-determining instructions and presentation instructions, albeit that it is addressed to the location of the user who has asked for the sample. This provides the advantage that nearly all steps of the process to arrive at a mail item are checked. Only the last step of sending it to the actual addressee is not thus checked.

The "send" button serves to make the message ready for mailing utilizing the presentation instruction file selected in the window 154, and to have it sent. In case of mail items, the actual transport naturally takes place beyond control by the computer system.

It is noted that different presentation instruction files may relate to transmission or preparation for transmission by means of the same peripheral device, albeit with different presentation instructions. Differences can consist, for instance, in instructions for adding inserts, the paper to be used for printing, or the envelopes for insertion. The two e-mail options can differ from each other, for instance, in that one option results in transmission with an HTML layout and encryption, while the other option results in transmission without a layout and encryption.

The presentation instructions according to a selected file of presentation instructions are read by the send dialog program from an associated presentation instruction file from presentation file 144 and coupled to the content-determining instructions of the message. The coupled files are subsequently sent to the execution file 126. It is also possible, for instance, to couple only a designation of the presentation file to the content-determining instructions and to leave the reading of the actual presentation instructions to the processing services 127.

For editing the set of files of presentation instructions, use is made of universal, interactive client-server operating interface software. According to this example, a host portion thereof is installed on the intranet server 135 and cooperates with a client portion 138 which is installed on a client system 104. This client portion, in this example, is formed by web browser software 138.

An example of a start page on the intranet server 135 for editing the set of files of presentation instructions is represented in Fig. 3. This is also the screen the user gets to see in response to giving an instruction to send a message, albeit that at the user's the buttons 150, 151, 152 are inactive. In response to the operation of the buttons 150-152, different successions of images with fill-in and operating possibilities are displayed. In response to the operation of the "change" button 151, in case in window 154 a type of message to be printed and finished was selected, for instance a window as represented in Fig. 4 can be shown. In this window, choices of peripheral equipment and two or more settings of the peripheral equipment are displayed. The settings can be changed by changing specifications to that effect in the right-hand column. If the "add" button 150 is operated, first an enumeration of available categories of send possibilities follows, and, after a choice therefrom, a window roughly as in Fig. 4 with possibilities of filling in specifications.

In response to addition or deletion of a file of presentation instructions, a list of files of presentation instructions in a memory accessible under the user authorization is updated. On the basis of this list, which forms part of the presentation file 144, the list is composed which is displayed by the send dialog software 137 in the window 154. This list is read and displayed in response to the activation of a send dialog program 137.

If it is desired to limit data traffic via the network, it may also be preferable to couple a mirror file of the presentation instructions to the file of presentation instructions for changing the mirror file of presentation instructions in response to changes made in the file of presentation instructions. These mirror files may for instance be stored in each client system.

The second data files 121-125 are included, from the execution file 126, as objects in a core 129 of an object model. This object model contains commands to generate and process documents in the form of the above-discussed second data files, data regarding the order of exit of documents and series of mutually associated documents, data regarding processing options and, if applicable, error reports. Layers around it are formed by software such as the processing services 127, the processing data file 128 and apparatus-specific or application-specific driver software 139, 140, 141 to drive equipment in accordance with instructions determined in the core 129. In accordance with the inputted options, image-defining instructions and presentation instructions are included as objects in the object model. The processing services 127 which have been designated process the instructions inputted into the object model, into a processed second data file. In accordance therewith, the apparatus-specific or application-specific driver software 139-141 subsequently provides for the drive of the equipment 108, 109, 130 and applications 142, 143 for causing messages to be mailed or causing messages at least to be made ready for mailing.

In the present example, the interactive window according to Fig. 3 is called in response to the operation of a "send as" option in an application. However, it is also possible to make the window according to Fig. 3 interactively accessible also for sending a message via a web browser. Then, in addition, the address of the content-determining file must be specified before sending a message can be proceeded to. The entry of the choice of a file of presentation instructions utilizing a universal server-client interface provides the advantage that such universal interfaces are available for many operating systems and are developed for new operating systems. The selection of presentation instruction files and the specification of processing services is thereby enabled for a large variety of operating systems, without this requiring development of different designs of the software for selecting the presentation instruction files.

Because the second file prior to processing is free of presentation instructions, also on the side of the processing of information in a format associated with the application 136 into a second data file with image-defining driving information, no specific software for this application is needed. Use can then be made of driving software for, for instance, printing apparatuses which are generally offered for a large variety of operating systems by manufacturers of printing apparatuses. As it is not necessary to process presentation instructions in the second data file, it is moreover better possible to use, as a second data file, if desired, other formats than Postscript, such as PCL files or flat ASCII files.

Electronic documents and documents which are to be remotely generated and printed are generated and finished, according to this example, by transmitting documents generated with the application 136 directly to the intranet server. It is also possible, from the application 136, to drive a web based e-mail or fax program which is installed on the server.

## Claims

1. A method for at least making ready for mailing at least one message intended for at least one addressee, comprising:
selecting presentation instructions valid for said at least one message, for determining at least one form of presentation of said at least one message to said at least one addressee;
transferring a file of content-determining instructions for said at least one message and said presentation instructions to a peripheral device for at least making ready for mailing said at least one message; and
at least making ready for mailing said at least one message in accordance with said file of content-determining instructions and said presentation instructions;
wherein selecting said presentation instructions occurs by selecting a single, priorly stored file of presentation instructions; and
wherein said file of presentation instructions contains instructions concerning the design of the document itself and concerning the processing of the document.

2. A method according to claim 1, wherein said content-determining instructions comprise printing instructions for driving a printer for printing said at least one message as at least one document, and wherein said presentation instructions comprise finishing instructions for finishing said at least one document.

3. A method according to claim 1 or 2, wherein selecting said file of presentation instructions is carried out by selecting a symbol which represents said file of presentation instructions.

4. A method according to claim 3, further comprising activating a send dialog program, subsequently displaying at least one symbol which represents a file of presentation instructions; wherein selecting said file of presentation instructions occurs by selecting a symbol which represents said file of presentation instructions, subsequently entering a send command and subsequently at least making ready for mailing said at least one message in accordance with said selected file of presentation instructions.

5. A method according to any one of the preceding claims, wherein selecting said presentation instructions occurs under a particular user authorization and by selecting a priorly stored file of presentation instructions; and
wherein editing said file of presentation instructions occurs, and is executable, exclusively under a different authorization than said user authorization.

6. A method according to any one of the preceding claims, wherein in response to the selection of different ones of said at least two files of presentation instructions the same peripheral device is driven for at least making ready for mailing said at least one message.

7. A method according to any one of the preceding claims, further comprising, prior to selecting said file of presentation instructions:
generating at least one file of presentation instructions in accordance with data selected or entered under said different authorization than said user authorization; and
storing said file of presentation instructions in said computer-readable memory.

8. A method according to claim 7, wherein entering data for said file of presentation instructions occurs utilizing universal, interactive client-server operating interface software.

9. A method according to any one of the preceding claims, further comprising displaying a message composed in accordance with presentation instructions of said selected file.

10. A method according to claim 9, wherein displaying said message composed in accordance with presentation instructions of said selected file occurs by means of universal, interactive client-server operating interface software.

11. A method according to any one of the preceding claims, further comprising displaying in the form of an animation successive operations for composing a message composed in accordance with presentation instructions of said selected file.

12. A method according to any one of the preceding claims, further comprising composing a test message in accordance with presentation instructions of said selected file and sending said test message to a location of a client system with which said file of presentation instructions has been selected.

13. A method according to any one of the preceding claims, wherein in response to the selection of said file of presentation instructions through any one of at least two different client systems, the same presentation instructions are used.

14. A method according to any one of the preceding claims, wherein in response to the selection of said file of presentation instructions under any one of at least two different user authorizations, the same presentation instructions are used.

15. A method according to claim 14, wherein said file of presentation instructions is stored centrally for coupling presentation instructions according to said file of presentation instructions to content-determining files in response to drive signals coming from a any one of at least two different client systems.

16. A method according to claim 15, wherein in response to addition or deletion of a file of presentation instructions, a list of files of presentation instructions in a memory accessible under said user authorization is updated.

17. A method according to claim 16, wherein said list of files of presentation instructions is read and displayed in response to activating a send dialog program.

18. A method according to any one of the preceding claims, further comprising at least one mirror file of presentation instructions coupled to said file of presentation instructions for modifying said mirror file of presentation instructions in response to modifications made in said file of presentation instructions.

19. A data structure in a computer-processable form, containing a computer program for causing message data to be sent concerning at least one message intended for at least one addressee, to at least one peripheral device for at least making ready for mailing said at least one message, comprising:
instructions for displaying presentation instructions for determining at least one form of presentation of said at least one message to said at least one addressee;
instructions for selecting from said presentation instructions presentation instructions valid for said at least one message; and
instructions for causing a file of content-determining instructions for said at least one message and said presentation instructions to be sent to a peripheral device for at least making ready for mailing said at least one message;
wherein said instructions for displaying presentation instructions are designed for displaying files of presentation instruction which each represent several presentation instructions;
wherein said presentation instructions are selectable by selecting a single, priorly stored file of presentation instructions; and
wherein said file of presentation instructions contains instructions concerning the design of the document itself and concerning the processing of the document.

20. A data structure according to claim 19, wherein said content-determining instructions comprise printing instructions for driving a printer for printing said at least one message as document, and wherein said presentation instructions comprise finishing instructions for finishing said at least one document.

21. A data structure according to claim 19 or 20, further comprising instructions for selectably displaying symbols which each represent one of said files of presentation instructions.

22. A data structure according to claim 21, further comprising a send dialog program containing instructions for displaying symbols which each represent one of said files of presentation instructions, and instructions for selecting one of said files of presentation instructions in response to the selection of one of said symbols.

23. A data structure according to any one of claims 19-22, wherein said instructions for selecting said file of content-determining instructions and for selecting said presentation instructions are operative under a particular user authorization; and wherein said files of presentation instructions are exclusively editable under a different authorization than said user authorization.

24. A data structure according to any one of claims 19-23, comprising at least two files of presentation instructions designed for driving the same peripheral device for at least making ready for mailing differently presented designs of said at least one message.

25. A data structure according to any one of claims 19-24, further comprising an interactive setting program for generating files of presentation instructions, comprising:
instructions for displaying settings concerning presentation instructions;
instructions for registering settings concerning presentation instructions as part of a file of presentation instructions in accordance with selected or entered data; and
instructions for storing in said computer-readable memory said registered settings concerning presentation instructions as a file of presentation instructions.

26. A data structure according to claim 25, wherein said setting program is designed for cooperation with universal, interactive client-server operating interface software.

27. A data structure according to any one of claims 19-26, further comprising instructions for displaying a message composed in accordance with presentation instructions of said selected file.

28. A data structure according to claim 27, wherein said instructions for displaying said message composed in accordance with presentation instructions of said selected file are designed for cooperation with universal, interactive client-server operating interface software.

29. A data structure according to any one of claims 19-28, further comprising instructions for displaying in the form of an animation successive operations for composing a message composed in accordance with presentation instructions of a selected file.

30. A data structure according to any one of claims 19-29, wherein said file of presentation instructions is selectable through any one of at least two different client systems.

31. A data structure according to any one of claims 19-30, wherein said file of presentation instructions is selectable under any one of at least two different user authorizations.

32. A data structure according to claim 30 or 31, wherein said file of presentation instructions is centrally stored for coupling presentation instructions according to said file of presentation instructions to content-determining files in response to driving signals coming from any one of at least two different client systems.

33. A data structure according to claim 32, wherein said file of presentation instructions is coupled with a list of files of presentation instructions in a memory accessible under said user authorization for automatically updating said list upon addition, modification or deletion of a file of presentation instructions.

34. A data structure according to claim 33, further comprising a send dialog program with instructions for reading and displaying said list of files of presentation instructions in response to the activation of said send dialog program.

35. A data structure according to any one of claims 19-34, further comprising at least one mirror file of presentation instructions coupled to said file of presentation instructions, for modifying said mirror file of presentation instructions in response to modifications made in said file of presentation instructions.
